# EUROPÄISCHE PATENTSCHRIFT

(11) **EP 1 712 863 B1**
(45) Veröffentlichungstag und Bekanntmachung des Hinweises auf die Patenterteilung: **12.11.2008**
(21) Anmeldenummer: 06005934.2
(22) Anmeldetag: 23.03.2006
(51) Int. Cl.: F28D 1/04, F28D 1/053, F02B 29/04

(54) **Anordnung von Wärmetauschern im Kraftfahrzeug**
Configuration of heat exchangers in an automotive vehicle
Arrangement d'échangeurs de chaleur dans une véhicule automobile

(30) Priorität: 14.04.2005 DE 102005017252
(43) Veröffentlichungstag der Anmeldung: 18.10.2006
(73) Patentinhaber: Modine Manufacturing Company, Racine, Wisconsin 53403-2552 (US)
(72) Erfinder: Kalbacher, Klaus Dipl.-Ing., 72414 Rangendingen (DE)
(74) Vertreter: Wolter, Klaus-Dietrich

(56) Entgegenhaltungen:
- DE-A1- 4 009 726
- FR-A- 626 130
- FR-A- 2 771 481
- US-A- 4 673 032
- US-A- 5 097 891
- US-A- 5 236 336
- US-A1- 2005 109 485

## Beschreibung

Die Erfindung betrifft eine Anordnung von Wärmetauschern im Kraftfahrzeug, die mit Kühlluft beaufschlagt sind, wobei die Wärmetauscher in Strömungsrichtung der Kühlluft hintereinander angeordnet sind, und wobei die Anordnung beispielsweise einen Kühlflüssigkeitskühler, einen Ladeluftkühler und einen Kondensator umfasst.

Solche Anordnungen sind in vielfältigen Variationen bekannt und notwendig, um beispielsweise die Kühlflüssigkeit des Antriebsmotors, dessen Ladeluft, das Kältemittel der Klimaanlage, und weitere Betriebsstoffe zu kühlen bzw. zu temperieren. Die Kühlluft wird in der Regel mittels eines in Kühlluftströmungsrichtung vor- oder meistens hinter - der Anordnung liegenden Ventilators beschleunigt.

Gemäß dem nicht aufzuhaltendem Streben nach technischen Fortschritt, steigen die Anforderungen der Kraftfahrzeughersteller an die Anordnung bezüglich der Kühlleistung ständig an und der zur Verfügung gestellte Bauraum im Kraftfahrzeug wird dabei stetig reduziert, wodurch die Hersteller solcher Anordnungen zu innovativen Lösungen herausgefordert werden. Bei all dem müssen die Anordnungen nach wie vor sehr servicefreundlich sein bzw. bleiben.

Um die Kühlleistung der Anordnung zu steigern, hat man im EP 522 288 B1 den Ladeluftkühler in zwei Teile aufgeteilt, die mittels einer die Ladeluft führende Verbindungsleitung verbunden sind. Die beiden Teile wurden in dort vorteilhafter Weise vor und hinter dem zentralen Kühlflüssigkeitskühler angeordnet. Zwischen den beiden Teilen des Ladeluftkühlers können neben dem Kühlflüssigkeitskühlers weitere Wärmetauscher, beispielsweise der Kondensator der Klimaanlage, angeordnet sein.

Eine zweistufige Kühlung der Ladeluft ist in der Kühleranordnung vorgesehen, die aus der DE 44 37 946 C2 bekannt ist. Der Ladeluftkühler ist, in Kühlluftströmungsrichtung gesehen, vor dem Kühlflüssigkeitskühler angeordnet worden.

In der DE 44 37 946 C2 ist ein Ladeluftkühler im unteren Bereich der Anordnung, in Kühlluftströmungsrichtung gesehen, ebenfalls vor dem Kühlflüssigkeitskühler liegend, angeordnet worden, wodurch der Kühlflüssigkeitskühler mit bereits vorgewärmter Kühlluft beaufschlagt wird, was als unerwünscht angesehen werden könnte. In dem genannten Stand der Technik beschäftigt man sich hauptsächlich, wie eingangs erwähnt, mit leistungsmäßig verbesserten Anordnungen.

Beispielsweise aus dem EP 360 362 A1 ist ein Kondensator bekannt, der eine Abstufung aufweist, die dadurch geschaffen wurde, dass einige der Flachrohre einer Flachrohrreihe kürzer als andere Flachrohre ausgebildet sind. Die Abstufung wurde vorgesehen, um einem Hindernis im Motorraum zu entsprechen. Das mit der beschriebenen Ausbildung beabsichtigte Ziel der besseren Bauraumausnutzung im Kraftfahrzeug ist somit aus diesem Dokument erkennbar.

In der DE 40 09726A1 wird ein Wärmtauscher-Lüftersystem mit mindestens zwei Wärmetauschern vorgeschlagen. Einer der Wärmetauscher wurde dort mit einer L-Form ausgebildet.

Die US 5 236 336 und die FR 2 771 481 zeigen jeweils einzelne Wärmetauscher, die eine in verschiedener Weise ausgestaltete Abstufung aufweisen.

Die Aufgabe der Erfindung besteht in der Bereitstellung einer leistungsmäßig und bauraummäßig optimierten Anordnung von Wärmetauschern für ein Kraftfahrzeug.

Diese Aufgabe wird bei einer im Oberbegriff des Anspruchs 1 angegebenen Anordnung durch dessen Kennzeichen erfindungsgemäß gelöst.

Gemäß der Erfindung weist wenigstens einer der Wärmetauscher eine abgestufte Querschnittsfläche auf. Die Abstufung des abgestuften Wärmetauschers verläuft in Längsrichtung der Flachrohre. Der durch die Abstufung geschaffene Freiraum ist mit wenigstens einem Teil wenigstens eines anderen Wärmetauschers belegt. Es wurde eine Anordnung geschaffen, die zahlreiche Vorteile besitzt. In dem geschaffenen Freiraum könnte sich anstelle eines Teils eines anderen Wärmetauschers auch ein kompletter anderer Wärmetauscher, beispielsweise ein Ölkühler, befinden, um eine kompakte Ausbildung der Anordnung zu erreichen. Deshalb wird im Anspruch 1 von "mindestens einem Teil eines Wärmetauschers" gesprochen. Zunächst wird sichergestellt, dass die Anordnung sehr kompakt ausgebildet ist. Dann hat man festgestellt, dass die Kühlleistung der einzelnen Wärmetauscher vergleichsweise sehr gut ist, da die gegenseitige Beeinflussung und die Erwärmung der Kühlluft durch vorgelagerte Wärmetauscher minimiert wird.

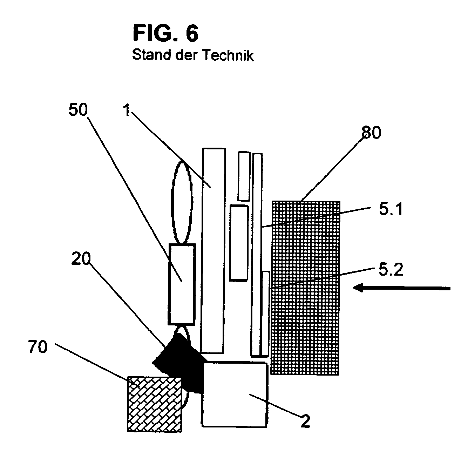

Im Stand der Technik hat man bereits den Klimakondensator mit einer Abstufung ausgebildet, wie es in der beigefügten Fig. 6 rein schematisch zu sehen ist. Dabei wurde eine aus mehreren Flachrohren bestehende Flachrohrreihe als Unterkühlstrecke 5.2 für das Kältemittel vor der für die Kondensation des Kältemittels vorgesehenen Flachrohrreihe 5.1 angeordnet. Eine solche Abstufung ist jedoch kaum zum Gewinn von Bauraum nutzbar, da Kondensatoren 5 gewöhnlich eine sehr geringe Tiefe, beispielsweise zwischen 10 und 20 mm, besitzen. Ferner hat sich diese Ausbildung nachteilig auf die Kühlleistung der in Kühlluftströmungsrichtung folgenden Wärmetauscher, beispielsweise auf die Kühlleistung des Kühlflüssigkeitskühlers, ausgewirkt, weil die Kühlluft bei Durchströmung des Kondensators zu stark aufgeheizt wurde. Darüber hinaus hat man festgestellt, dass die Leistung des Kondensators selbst nicht befriedigend ist.

Es ist gemäß weiterer Gestaltungsmerkmale der vorliegenden Erfindung vorgesehen, dass der abgestufte Wärmetauscher vorzugsweise im unteren Bereich der Anordnung platziert ist.

Es ist weiter vorgesehen, dass der die Abstufung aufweisende Wärmetauscher so angeordnet ist, dass seine Abstufung im Kraftfahrzeug nach vorne zeigt. Dadurch wird der im Servicefall erforderliche Aus - und Einbau des Wärmetauschers ermöglicht oder wesentlich erleichtert. Ferner wird, zumindest in manchen Einsatzfällen, die Möglichkeit eröffnet, die Abstufung räumlich zu vergrößern, um die Kühlkapazität bzw. den durchströmbaren Querschnitt des abgestuften Wärmetauschers zu vergrößern, wodurch wegen der tiefen Lage des abgestuften Wärmetauschers keine spürbare Verschlechterung an anderen Wärmetauschern auf der Seite der Kühlluft auftritt.

Es ist weiter vorgesehen, dass der abgestufte Wärmetauscher in einer gemeinsamen vertikalen Ebene mit einem Kühlflüssigkeitskühler, oder nur leicht versetzt dazu, angeordnet ist. Der abgestufte Wärmetauscher ist vorzugsweise unterhalb des Kühlflüssigkeitskühlers angeordnet. Eine Anordnung desselben oberhalb des Kühlflüssigkeitskühlers ist nicht ausgeschlossen. Dadurch wird der Kühlflüssigkeitskühler nicht so stark durch vorgelagerte Wärmetauscher beeinträchtigt. Dies trifft besonders dann zu, wenn es sich bei dem abgestuften Wärmetauscher um einen Ladeluftkühler handelt, da auch die Ladeluft sehr hohe Temperaturen aufweist, die die Kühlluft entsprechend aufheizt.

In Kühlluftströmungsrichtung vor dem Kühlflüssigkeitskühler können weitere Wärmetauscher angeordnet werden, von denen einer der Kondensator der Fahrzeugklimaanlage ist. Der Teil des Wärmetauschers, der den durch die Abstufung geschaffenen Freiraum belegt, ist vorzugsweise ein Teil des Kondensators.

Die Abstufung wird dadurch geschaffen, dass der Wärmetauscher wenigstens zwei Reihen von Flachrohren aufweist, wobei die Anzahl der Flachrohre in der einen Reihe kleiner ist als die Anzahl der Flachrohre in der anderen Reihe.

Die Querschnitte der Flachrohre der einen Reihe sind gleich oder verschieden von den Querschnitten der Flachrohre der anderen Reihe.

Eine alternative Ausbildung sieht vor, dass die Abstufung dadurch geschaffen wird, dass der Wärmetauscher eine einzige Reihe von Flachrohren aufweist, wobei einige der Flachrohre eine wesentlich kleinere Querschnittsabmessung aufweisen als andere Flachrohre.

Der abgestufte Wärmetauscher als Teil der Anordnung ist im Anspruch 12 enthalten.

Die Erfindung wird im Anschluss in mehreren Ausführungsbeispielen näher erläutert, wozu auf die beigefügten Zeichnungen Bezug genommen wird. Aus der folgenden Beschreibung gehen weitere Merkmale und deren Vorteile hervor.
Die Fig. 1 und 2 zeigen ein erstes Ausführungsbeispiel in rein schematischer Art in einer Seitenansicht auf die Anordnung.
Die Fig. 3 zeigt ein bevorzugtes anderes Ausführungsbeispiel in derselben Ansicht.
Die Fig. 4 und 5 zeigen alternative Gestaltungen des abgestuften Wärmetauschers.
Die Fig. 6 zeigt eine Anordnung aus dem Stand der Technik.
Die Fig. 7 zeigt ein Anwendungsbeispiel der Anordnung für einen PKW.

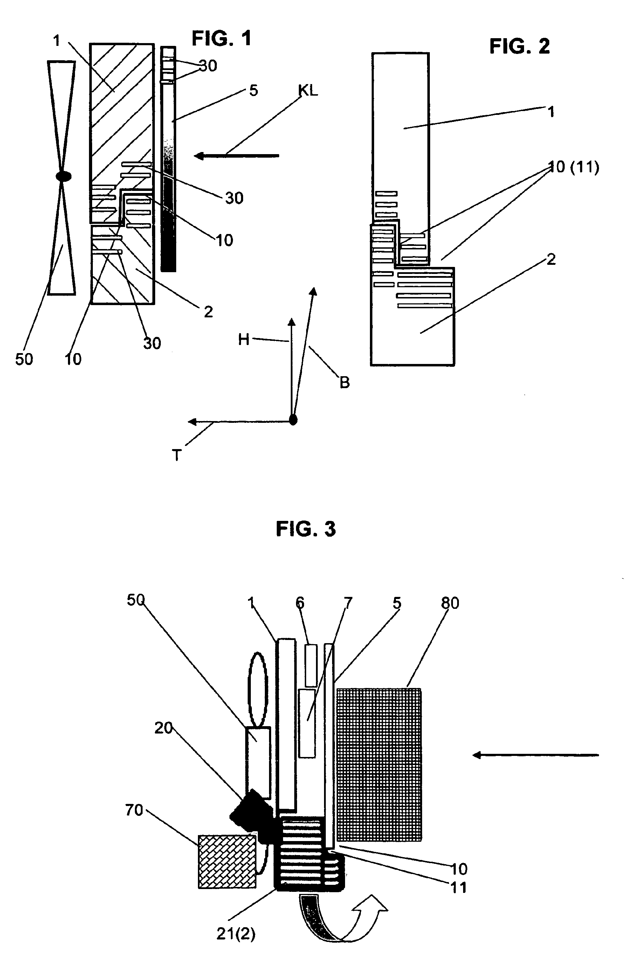

Die Anordnung gemäß dem ersten Ausführungsbeispiel aus den Fig. 1 und 2 besteht aus einem Kühlflüssigkeitskühler **1** und einem darunter angeordneten Ladeluftkühler **2.** In diesem Ausführungsbeispiel wurden sowohl der Kühlflüssigkeitskühler **1** als auch der Ladeluftkühler **2** mit einer Abstufung **10** ausgebildet, wobei sich die Abstufungen **10** beider Kühler **1, 2** überdecken. Ein Ventilator **50** ist in Strömungsrichtung der Kühlluft **KL** hinter der Anordnung angeordnet und saugt die Kühlluft durch die Anordnung hindurch an, wobei die Kühlluft von der gedachten Frontseite des Kraftfahrzeuges angesaugt wird, was durch einen Pfeil kenntlich gemacht wurde. Die Wärmeübertrager besitzen ein Kühlnetz aus Flachrohren **30** und dazwischen angeordneten Kühlrippen **40,** durch die die Kühlluft strömt. Das räumliche Verständnis der Anordnung wird durch Koordinaten erleichtert, wobei **T** als Tiefe zu verstehen ist und in Längsrichtung eines gedachten Fahrzeuges verläuft, die, wie man sieht, mit der Strömungsrichtung der Kühlluft **KL** übereinstimmt. **H** steht für die Höhenrichtung und **B** für die Breitenrichtung des Fahrzeuges bzw. der Anordnung. In der Fig. 1 wurden die Querschnitte zweier Flachrohrreihen im Kühlflüssigkeitskühler **1** und im Ladeluftkühler **2** angedeutet, sodass ersichtlich ist, dass die Längsrichtung der Flachrohre **30** in Richtung der senkrecht zur Zeichnungsebene verlaufenden Fahrzeugbreite **B** liegt. Ferner ist erkennbar, dass die Abstufung **10** an dem Kühlflüssigkeitskühler **1** und an dem Ladeluftkühler **2** in Längsrichtung **B** der Flachrohre **30** vorgesehen ist. In der Fig. 2 wurde der praktisch etwas häufiger auftretende Fall angedeutet, bei dem der unten angeordnete Kühler **2** eine größere Tiefe **T** seines Kühlnetzes aufweist als der darüber angeordnete Kühler **1.** Falls ein Kondensator **5** zum Einsatz kommt, so wird dieser ebenfalls in den durch die Abstufung **10** geschaffenen Freiraum **11** hineinragen, wodurch insgesamt eine sehr kompakte Anordnung geschaffen wurde. Es sollte ferner insbesondere aus der Fig. 2 erkennbar sein, dass die Querschnitte der Flachrohre **30** in der einen Reihe wesentlich größer sind als die Querschnitte der Flachrohre **30** in der anderen Reihe. Eine Flachrohrreihe ist dadurch definiert, dass Flachrohre **30** mit Abstand, entlang einer gemeinsamen Geraden, mit ihren Breitseiten zueinander hinweisend, angeordnet sind. Dazwischen, also in den Abständen, befinden sich die Kühlrippen **40,** die gewöhnlich mit den Breitseiten der Flachrohre **30** verbunden sind. Nicht gezeigte Ausführungen weisen mehr als zwei Flachrohrreihen in einem Wärmetauscher auf.

Der in Fig. 1 angedeutete Kondensator **5** besitzt nur eine einzige Reihe von Flachrohren **30,** die eine einheitliche Querschnittsgröße (Schmalseite x Breitseite) besitzen. Die Abmessung in Tiefenrichtung **T** liegt bei etwa 15 mm. Der Kondensator **5** wird in keinem der Ausführungsbeispiele als abgestufter Wärmetauscher ausgebildet, um die Nachteile des Standes der Technik zu vermeiden. (siehe oben)

Aus der Fig. 3 sind, im Vergleich mit dem Stand der Technik gemäß Fig. 6, die Vorteile der Anordnung für bestimmte Anwendungsfälle ersichtlich. Mit dem Bezugszeichen **70** wurde der unveränderliche Raumbedarf der Vorderradachse des Kraftfahrzeuges angedeutet und das Bezugszeichen **80** zeigt die ebenfalls unveränderbare Position des Stoßfängers des Kraftfahrzeuges. Aus dem Vergleich der beiden Figuren ist zu erkennen, dass im Falle der Fig. 3 die Aus - und

Einbaubarkeit des Ladeluftkühlers **2** sichergestellt ist, was im Falle der Fig. 6 nicht möglich ist. Beim Ein - bzw. Ausbau wird der Ladeluftkühler **2** gemäß dem in der Fig. 3 unten eingezeichneten Pfeil nach vorne angekippt, um denselben aus - bzw. einzubauen. Ferner ist aus der Fig. 3 ersichtlich, dass es möglich ist, die durchströmbare Fläche des Ladeluftkühlers **2** nach vorne hin zu vergrößern, da unterhalb des Stoßfängers **80** bisher ungenutzt gebliebener Bauraum vorhanden ist. Mit dem Bezugszeichen **20** wurde einer der recht großvolumigen Stutzen des Ladeluftkühlers **2** angedeutet. Der abgestufte Ladeluftkühler **2** wurde in der Fig. 3 lediglich durch seinen entsprechend abgestuften Rohrboden **21** dargestellt. Die Bezugszeichen **6** und **7** beziehen sich in diesem Ausführungsbeispiel auf Zusatzkühler für Betriebsstoffe.

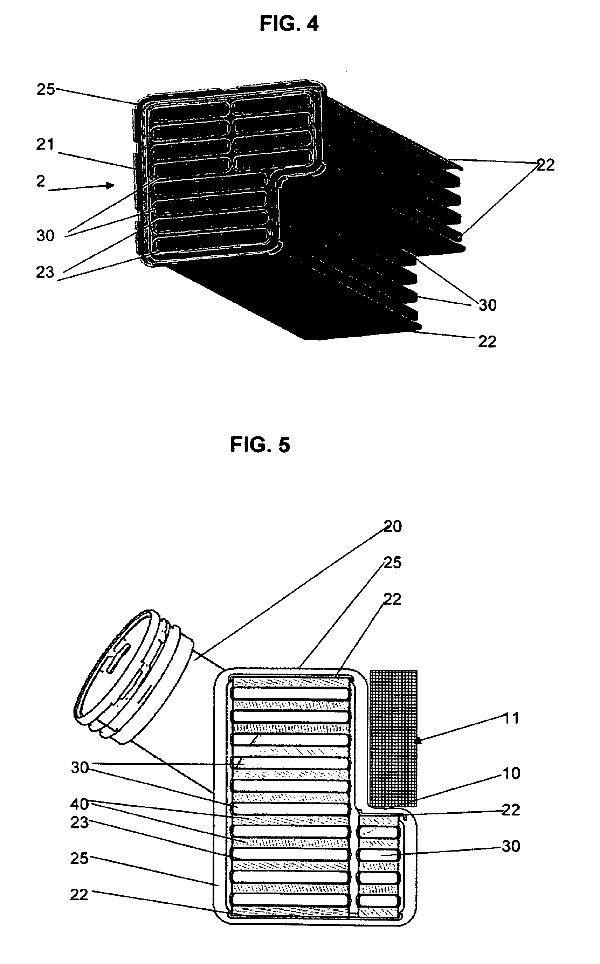

Die Fig. 4 zeigt weitere Details des abgestuften Wärmetauschers, der hier, wie oben erwähnt, als Ladeluftkühler **2** zum Einsatz kommt. Zu sehen ist ein Blick auf einen der Rohrböden **21,** die Öffnungen **23** aufweisen, die jeweils ein Ende eines Flachrohres **30** aufzunehmen. Es sind in diesem Ausführungsbeispiel zwei Reihen von Flachrohren **30** vorhanden. Die im Bild linke bzw. erste Reihe besitzt vier Flachrohre **30** mit gleich großer Querschnittsfläche (Schmalseite x Breitseite) und darunter weitere vier Flachrohre **30** mit wesentlich größerer Querschnittsfläche, die jedoch untereinander ebenfalls identisch sind. Die im Bild rechte bzw. zweite Reihe besteht lediglich aus vier Flachrohren **30** deren Querschnitte sowohl bezüglich der Fläche als auch bezüglich der Form untereinander und auch mit den Querschnitten der ersten vier Flachrohre **30** der ersten Reihe identisch sind. Die dadurch realisierte Abstufung **10** ist erkenntlich und der damit geschaffene Freiraum **11** ebenfalls, der in der Fig. 5 als karierte Fläche eingezeichnet wurde. Die Fig. 5 zeigt den Rohrboden **21** eines weiteren Ausführungsbeispiels mit Öffnungen **23** für lediglich eine Reihe von Flachrohren **30.** Die Reihe besteht aus vier identischen Flachrohren **30** und aus vier Flachrohren **30** mit größerer Querschnittsfläche. Die Anzahl der Flachrohre pro Reihe und die Anzahl der Reihen richtet sich nach den jeweiligen Anforderungen. Die Rohrböden **21** sind mit einem umgeformten Rand **25** ausgebildet, um jeweils einen nicht gezeichneten Sammelkasten aufnehmen und befestigen zu können.

Es soll darauf hingewiesen werden, dass auch die anderen Wärmetauscher gewöhnlich mit solchen Sammelkästen ausgestattet sind, auch wenn diese nicht gezeichnet wurden.

Die gezeigten Ausführungsbeispiele betreffen Anordnungen mit in Querrichtung des Fahrzeuges verlaufenden bzw. horizontal angeordneten Flachrohren **30,** da solche Anordnungen insbesondere bei Pkw - Anwendungen häufiger sind. Es muss jedoch darauf aufmerksam gemacht werden, dass Anordnungen mit sogenannten "Fallstromkühlern", also mit senkrecht, d.h. in Höhenrichtung **H,** angeordneten Flachrohren **30,** ebenso möglich sind und demzufolge vom vorstehend beschriebenen Erfindungsgedanken umfasst sein sollen.

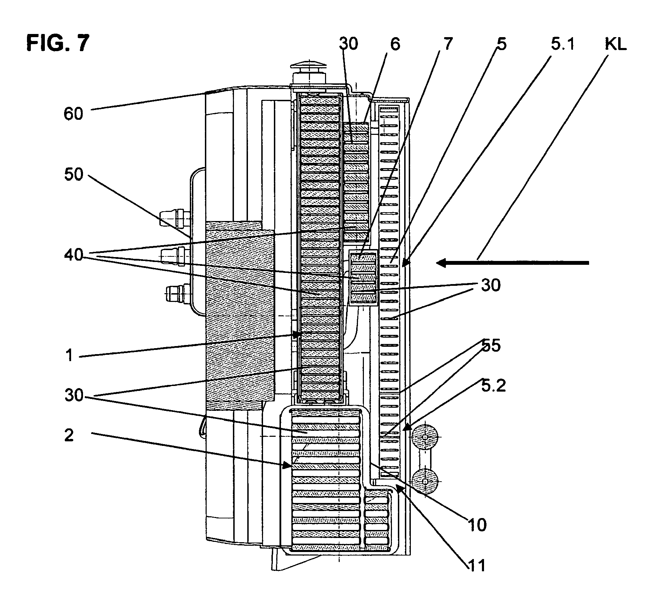

Schließlich zeigt die Fig. 7 ein für die praktische Anwendung in einem PKW vorbereitetes Ausführungsbeispiel, welches prinzipiell mit der Fig. 3 übereinstimmt. Sämtliche Wärmetauscher **1, 2, 5, 6, 7** sind mit ihren Flachrohren **30** in der erwähnten Querrichtung angeordnet. Dazwischen befinden sich an sich bekannte Kühlrippen, wobei das Bezugszeichen **40** lediglich auf deren Position hinweist. Der Ladeluftkühler **2** besitzt eine Abstufung **10,** die einen Freiraum **11** schafft. In diesem Freiraum **11** befindet sich ein Teil der Unterkühlstrecke **5.2** des Kondensators **5.** Die Kondensationsstrecke **5.1** befindet sich auf einer vertikalen Ebene mit der Unterkühlstrecke **5.2.** Es gibt bekanntlich Trennwände **55** in den Sammlern des Kondensators **5,** die zu einer beispielsweise von oben nach unten verlaufenden serpentinenartigen Durchströmung von Gruppen von Flachrohren **30** führen. Auf der Rückseite befindet sich eine Ventilatorhaube **60,** in der der Ventilator rotiert. Es ist erkennbar, dass insbesondere in Tiefenrichtung **T** sehr wenig Platz für die Anordnung benötigt wird.

## Patentansprüche

1. Anordnung von Wärmetauschern im Kraftfahrzeug, die in Strömungsrichtung der Kühlluft angeordnet und mit Kühlluft (KL) beaufschlagt sind, wobei die Anordnung wenigstens einen Kühlflüssigkeitskühler (1), einen Ladeluftkühler (2) und bedarfsweise einen Kondensator (5) und/oder andere Wärmetauscher umfasst, die ein Kühlnetz aus Flachrohren (30) und Kühlrippen (40) für die Kühlluft (KL) aufweisen, wobei
wenigstens einer der Wärmetauscher (2) einen abgestuften Querschnitt aufweist, und der durch die Abstufung (10) geschaffene Freiraum (11) mit wenigstens einem Teil wenigstens eines anderen Wärmetauschers (5) belegt ist. **dadurch gekennzeichnet, dass** die Abstufung (10) des abgestuften Wärmetauschers in Längsrichtung der Flachrohre (30) vorgesehen ist.

2. Anordnung nach Anspruch 1, **dadurch gekennzeichnet, dass** der abgestufte Wärmetauscher vorzugsweise im unteren Bereich der Anordnung platziert ist.

3. Anordnung nach Anspruch 1 oder 2, **dadurch gekennzeichnet, dass** der die Abstufung (10) aufweisende Wärmetauscher so angeordnet ist, dass seine Abstufung (10) im Kraftfahrzeug vorzugsweise nach vorne zeigt.

4. Anordnung nach einem der vorstehenden Ansprüche, **dadurch gekennzeichnet**, der abgestufte Wärmetauscher (2) etwa in einer gemeinsamen vertikalen Ebene mit einem Kühlflüssigkeitskühler (1) angeordnet ist.

5. Anordnung nach einem der vorstehenden Ansprüche, **dadurch gekennzeichnet, dass** der abgestufte Wärmetauscher (2) unterhalb des Kühlflüssigkeitskühlers (1) angeordnet ist und dass in Kühlluftströmungsrichtung vor dem Kühlflüssigkeitskühler weitere Wärmetauscher angeordnet sind, von denen einer der Kondensator (5) der Fahrzeugklimaanlage ist.

6. Anordnung nach einem der vorstehenden Ansprüche, **dadurch gekennzeichnet, dass** der Teil des Wärmetauschers, der den durch die Abstufung (10) geschaffenen Freiraum (11) belegt vorzugsweise ein Teil des Kondensators (5) ist.

7. Anordnung nach einem der vorstehenden Ansprüche, **dadurch gekennzeichnet**, das der abgestufte Wärmetauscher vorzugsweise der Ladeluftkühler (2) ist.

8. Anordnung nach einem der vorstehenden Ansprüche, **dadurch gekennzeichnet, dass** die Abstufung (10) **dadurch** geschaffen ist, dass der Wärmetauscher wenigstens zwei Reihen von Flachrohren (30) aufweist, wobei die Anzahl der Flachrohre (30) in der einen Reihe kleiner ist als die Anzahl der Flachrohre in der anderen Reihe.

9. Anordnung nach Anspruch 8, **dadurch gekennzeichnet, dass** die Querschnittsgröße der Flachrohre (30) der einen Reihen gleich oder verschieden von den Querschnittsgröße der Flachrohre (30) der anderen Reihe ist.

10. Anordnung nach einem der vorstehenden Ansprüche 1 - 7, **dadurch gekennzeichnet, dass** die Abstufung (10) **dadurch** geschaffen ist, dass der Wärmetauscher eine einzige Reihe von Flachrohren (30) aufweist, wobei einige der aufeinander folgenden Flachrohre (30) eine kleinere Querschnittsgröße aufweisen als andere Flachrohre (30).

## Claims

1. Arrangement of heat exchangers in a motor vehicle, which heat exchangers are arranged in the flow direction of the cooling air and are impinged on by cooling air (KL), with the arrangement comprising at least one liquid cooler (1), a charge-air cooler (2) and, if required, a condenser (5) and/or other heat exchangers which have a cooling network composed of flat tubes (30) and cooling fins (40) for the cooling air (KL), with at least one of the heat exchangers (2) having a stepped cross section, and the free space (11) which is created by the step (10) being occupied by at least a part of at least one other heat exchanger (5), **characterized in that** the step (10) of the stepped heat exchanger is provided in the longitudinal direction of the flat tubes (30).

2. Arrangement according to Claim 1, **characterized in that** the stepped heat exchanger is preferably located in the lower region of the arrangement.

3. Arrangement according to Claim 1 or 2, **characterized in that** the heat exchanger which has the step (10) is arranged such that its step (10) preferably points toward the front of the motor vehicle.

4. Arrangement according to one of the preceding claims, **characterized in that** the stepped heat exchanger (2) is arranged approximately in a common vertical plane with a cooling liquid cooler (1).

5. Arrangement according to one of the preceding claims, **characterized in that** the stepped heat exchanger (2) is arranged below the cooling liquid cooler (1) and **in that** further heat exchangers are arranged upstream of the cooling liquid cooler in the cooling air flow direction, one of which further heat exchangers is the condenser (5) of the vehicle air-conditioning system.

6. Arrangement according to one of the preceding claims, **characterized in that that** part of the heat exchanger which occupies the free space (11) created by the step (10) is preferably a part of the condenser (5).

7. Arrangement according to one of the preceding claims, **characterized in that** the stepped heat exchanger is preferably the charge-air cooler (2).

8. Arrangement according to one of the preceding claims, **characterized in that** the step (10) is created by virtue of the heat exchanger having at least two rows of flat tubes (30), with the number of flat tubes (30) in one row being smaller than the number of flat tubes in the other row.

9. Arrangement according to Claim 8, **characterized in that** the cross-sectional size of the flat tubes (30) of one row is equal to or different from the cross-sectional size of the flat tubes (30) of the other row.

10. Arrangement according to one of the preceding Claims 1-7, **characterized in that** the step (10) is created by virtue of the heat exchanger having a single row of flat tubes (30), with some of the successive flat tubes (30) having a smaller cross-sectional size than other flat tubes (30).

## Revendications

1. Agencement d'échangeurs de chaleur dans un véhicule automobile, qui sont disposés dans la direction d'écoulement de l'air de refroidissement et qui sont sollicités avec de l'air de refroidissement (KL), l'agencement comprenant au moins un refroidisseur de liquide de refroidissement (1), un refroidisseur d'air de suralimentation (2) et au besoin un condenseur (5) et/ou d'autres échangeurs de chaleur, qui présentent un réseau de refroidissement constitué de tubes plats (30) et d'ailettes de refroidissement (40) pour l'air de refroidissement (KL),
au moins l'un des échangeurs de chaleur (2) présentant une section transversale étagée, et l'espace libre (11) créé par l'étagement (10) étant occupé par au moins une partie d'au moins un autre échangeur de chaleur (5), **caractérisé en ce que** l'étagement (10) de l'échangeur de chaleur étagé est prévu dans la direction longitudinale des tubes plats (30).

2. Agencement selon la revendication 1, **caractérisé en ce que** l'échangeur de chaleur étagé est de préférence placé dans la région inférieure de l'agencement.

3. Agencement selon la revendication 1 ou 2, **caractérisé en ce que** l'échangeur de chaleur présentant l'étagement (10) est disposé de telle sorte que son étagement (10) soit de préférence tourné vers l'avant dans le véhicule automobile.

4. Agencement selon l'une quelconque des revendications précédentes, **caractérisé en ce que** l'échangeur de chaleur étagé (2) est disposé approximativement dans un plan commun vertical avec un refroidisseur de liquide de refroidissement (1).

5. Agencement selon l'une quelconque des revendications précédentes, **caractérisé en ce que** l'échangeur de chaleur étagé (2) est disposé sous le refroidisseur de liquide de refroidissement (1) et **en ce que** d'autres échangeurs de chaleur sont disposés dans la direction d'écoulement de l'air de refroidissement avant le refroidisseur de liquide de refroidissement, dont l'un est le condenseur (5) de l'installation de climatisation du véhicule.

6. Agencement selon l'une quelconque des revendications précédentes, **caractérisé en ce que** la partie de l'échangeur de chaleur qui est occupée par l'espace libre (11) créé par l'étagement (10) est de préférence une partie du condenseur (5).

7. Agencement selon l'une quelconque des revendications précédentes, **caractérisé en ce que** l'échangeur de chaleur étagé est de préférence le refroidisseur d'air de suralimentation (2).

8. Agencement selon l'une quelconque des revendications précédentes, **caractérisé en ce que** l'étagement (10) est créé **en ce que** l'échangeur de chaleur présente au moins deux rangées de tubes plats (30), le nombre des tubes plats (30) étant inférieur dans une rangé au nombre des tubes plats dans l'autre rangée.

9. Agencement selon la revendication 8, **caractérisé en ce que** la taille en section transversale des tubes plats (30) d'une rangée est identique ou différente à la taille en section transversale des tubes plats (30) de l'autre rangée.

10. Agencement selon l'une quelconque des revendications 1 à 7, **caractérisé en ce que** l'étagement (10) est créé **en ce que** l'échangeur de chaleur présente une rangée unique de tubes plats (30), certains des tubes plats (30) successifs présentant une taille en section transversale inférieure à d'autres tubes plats (30).
